# EUROPÄISCHE PATENTSCHRIFT

(11) **EP 1 262 333 B1**
(45) Veröffentlichungstag und Bekanntmachung des Hinweises auf die Patenterteilung: **16.03.2005**
(21) Anmeldenummer: 02011918.6
(22) Anmeldetag: 29.05.2002
(51) Int. Cl.: B60B 3/04, B60B 3/10

(54) **Fahrzeugrad, insbesondere für Personenkraftwagen**
Vehicle wheel, in particular for motor vehicle
Roue de véhicule, en particulier pour véhicule automobile

(30) Priorität: 30.05.2001 DE 20108995 U
(43) Veröffentlichungstag der Anmeldung: 04.12.2002
(73) Patentinhaber: Hayes Lemmerz Holding GmbH, 53639 Königswinter (DE)
(72) Erfinder: Stelzer, Günter, 53604 Bad Honnef (DE); Rode, Karl, 53639 Königswinter (DE); Kermelk, Werner, 53804 Much (DE)
(74) Vertreter: Althaus, Arndt, Dipl.-Ing.

(56) Entgegenhaltungen:
- WO-A-03/037651
- DE-A- 1 605 545
- US-A- 4 256 347
- US-A- 6 042 194
- PATENT ABSTRACTS OF JAPAN Bd. 0050, Nr. 97 (M-075), 24. Juni 1981 (1981-06-24) & JP 56 043001 A (YANAGAWA SEIKI KK), 21. April 1981 (1981-04-21)
- PATENT ABSTRACTS OF JAPAN Bd. 2000, Nr. 16, 8. Mai 2001 (2001-05-08) & JP 2001 001701 A (SUZUKO KK), 9. Januar 2001 (2001-01-09)

## Beschreibung

Die Erfindung betrifft ein Fahrzeugrad, insbesondere für Personenkraftwagen, mit einem Felgenhörner, Felgenschultern und Felgenbett umfassenden Felgenteil zur Aufnahme eines Reifens und einem an dem Felgenteil angeschlossenen, aus einer einstückigen Metallblechplatine durch Umformen und Schneiden gebildeten Schüsselteil, der einen Bolzenlöcher für Radschrauben und ein Mittenloch zur Zentrierung an der Fahrzeugnabe aufweisenden Zentralteil und mehrere Speichenanordnungen für die Kraftübertragung zwischen Fahrzeugnabe und Felgenteil umfasst, wobei jede Speichenanordnung von wenigstens zwei sich im wesentlichen radial vom Zentralteil aus erstreckenden Speichenstreben gebildet ist und die äußeren Speichenstrebenenden der Speichenstreben einer Speichenanordnung über eine Querstrebe miteinander verbunden sind.

Ein gattungsgemäßes Fahrzeugrad und ein zugehöriges Herstellverfahren sind in der US 6,042,194 offenbart. Bei dem gattungsgemäßen Fahrzeugrad mit einem aus einer einzigen Metallblechplatine einstückig hergestellten Schüsselteil sind, ausgehend von der Ebene des Zentralteils, die die Speichenstege und Querstreben bildenden Abschnitte jeweils zur Radaußenseite durch einen Biegeverfahrensschritt umgeschlagen, so daß ein durchgehender, den Schüsselrand bildender Steg ausgebildet ist. Die Querstreben des Schüsselrandes sind relativ kurz und gehen in vergleichsweise lange Speichenstreben über, die sich zwischen den Querstreben und dem Zentralteil erstrecken, etwa V-förmige Lüftungsöffnungen begrenzen und im gesamten Bereich der Lüftungsöffnungen von dem Felgenteil beabstandet sind.

Auch der Zwischenraum zwischen den eine Speichenanordnung bildenden Speichenstreben wird bis auf einen schmalen Streifen unmittelbar an den Querstreben bzw. Speichenstrebenenden ausgeschnitten, so daß in Draufsicht auf die gattungsgemäßen Schüsselteile das Styling der Speichenstreben ausschließlich durch die Dicke des Ausgangsblechs bestimmt ist. Die Breite des Schüsselrandes, mithin die Tiefe der Speichenstreben, entspricht etwa der fünffachen Blechdicke. Die Anbindung zwischen Schüsselteil und Felgenteil erfolgt über Schweißverbindungen im Bereich der Querstreben.

Durch die zuvor beschriebene Gestaltung des Schüsselteils kann deren Gewicht niedrig gehalten werden. Gleichwohl ist das Gesamtgewicht des aus der US 6,042,194 bekannten Fahrzeugrades vergleichsweise hoch, da der Felgenteil aufgrund der gewählten Ausgestaltung des Schüsselteils eine relativ große Felgendicke erfordert, um sämtliche axialen und radialen Belastungskräfte im Bereich der Schweißnaht während der Fahrt mit der notwendigen Sicherheit aushalten zu können. Die Gestaltung des Schüsselteils erfordert ferner eine Metallblechplatine mit relativ großem Ausgangsdurchmesser, wobei der Anteil der bei der Fertigung weggeschnittenen Fläche ziemlich hoch ist.

Aufgabe der Erfindung ist es, ein Fahrzeugrad zu schaffen, das einfach und kostengünstig herstellbar ist, vielfältigste Gestaltungsmöglichkeiten beim Styling des Fahrzeugrades, insbesondere das Vorsehen großer Lüftungslöcher, bietet und gegenüber den bekannten Fahrzeugrädern eine Gewichtsminimierung mit sich bringt.

Diese Aufgabe wird durch die in Anspruch 1 angegebene Erfindung gelöst. Erfindungsgemäß ist vorgesehen, daß die Querstreben in einen konzentrisch umlaufenden, im wesentlichen parallel zur Radachse ausgerichteten und sämtliche Speichenstrebenenden miteinander verbindenden ringförmigen Schüsselrand integriert sind, der einstückig durch einen Biege-, Drückoder Tiefziehvorgang aus dem Metallblech ausgebildet ist, ein konzentrisch umlaufendes Anschlußteil für den Anschluß an dem Felgenteil bildet und jeweils zusammen mit zwei Speichenstreben benachbarter Speichenanordnungen großflächige Öffnungen bzw. Lüftungslöcher im Schüsselteil begrenzt. Im Gegensatz zu dem gattungsgemäßen Fahrzeugrad erfolgt nach der Erfindung die Kraftübertragung zwischen den Speichenstreben der Speichenanordnungen und dem Felgenteil nicht nur partiell über schmale Zonen von Querstreben, sondern gleichmäßig über den durchgehenden, konzentrischen Schüsselrand. Die Abstützung zwischen Schüsselteil und Felgenteil über eine konzentrisch umlaufende Fläche ermöglicht, daß das Felgenteil insgesamt aus dünneren Blechen gefertigt werden kann, mithin insgesamt leichter werden kann, da partiellen Überbeanspruchungen im Felgenteil konstruktiv entgegengewirkt wird. Die hierdurch erzielbaren Gewichtsreduzierungen des Felgenteils, dessen Innendurchmesser und Tiefenabmessung in den meisten Bereichen größer als der Außendurchmesser des Schüsselrandes ist, beeinflussen wesentlich stärker das Gesamtgewicht des Fahrzeugrades. Außerdem werden durch die gleichmäßige Abstützung des Felgenteils am Schüsselteil Rundlaufabweichungen, wie sie bei der gattungsgemäßen Konstruktion auftreten können, konstruktiv vermieden. Der konzentrisch umlaufende Schüsselrand bietet fertigungstechnisch erhebliche Vorteile, da für das Herstellen des Schüsselteils z.B. durch Tiefziehen einerseits das Zentralteil, andererseits der durchgehende Schüsselrand eine Halte- oder Klemmfläche für Niederhalterwerkzeuge bilden können.

Bei der bevorzugten Ausgestaltung ist der Schüsselrand um etwa 90° bis 97° relativ zum Zentralteil umgebogen und mit Presssitz in den Felgenteil eingefügt, so daß die Entlastung der Schüsselanbindung durch den Presssitz eine weitere, signifikante Verringerung der Felgendicke ermöglicht. Zweckmäßig ist der Schüsselrand am Innenumfang der äußeren Felgenschulter, besonders günstig am Innenumfang des Tiefbetts des Felgenteils angeschlossen und/oder mit einer auf die Anzahl der Speichenanordnungen abgestimmten Anzahl von Schweißnähten mit dem Felgenteil verschweißt. Vorzugsweise entspricht die Anzahl der Speichenanordnungen der Anzahl an Bolzenlöchern, um ein harmonisches Styling des Fahrzeugrades zu erzielen. Bei einer für die Aufnahme der Radialkräfte optimierten Gestaltung des Fahrzeugrades schneidet eine durch das Zentralteil hindurchgehende Ebene den Schüsselrand und/oder die Speichenanordnungen sind nur zwischen Zentralteil und Schüsselrand aus der Ebene zu der Radaußenseite brückenartig herausgewölbt.

Insbesondere bevorzugt ist, wenn jede Speichenanordnung aus zwei parallel zueinander und im wesentlichen radial verlaufenden Versteifungsrippen gebildet ist, deren Ursprung im Zentralteil auf Höhe der Bolzenlöcher liegt und die wenigstens eine Stufe zwischen einem die Lüftungsöffnungen begrenzenden Randsteg und einem etwa senkrecht zum Zentralteil ausgerichteten Verbindungsschenkel aufweisen. Der Randsteg sorgt hierbei für eine zusätzliche Verstärkung bzw. Versteifung des Schüsselteils zur Aufnahme von durch die dynamischen Belastungen im Fahrteinsatz hervorgerufenen Torsions- und Biegebeanspruchungen zwischen Schüsselrand und Zentralteil. Ferner entsteht ein wesentlich harmonischeres Styling, als dies bei den gattungsgemäßen Fahrzeugrädern, bei denen die Blechdicke das Styling mitbestimmt, der Fall war. Eine weitere Verstärkung des Fahrzeugrades wird erzielt, wenn die beiden Verbindungsschenkel der Versteifungsrippen einer Speichenanordnung über einen Zwischenstreifen ineinander übergehen, der sich vom Zentralteil bis zum Schüsselrand durchgehend erstreckt. Die gleichmäßig über den Umfang verteilten Versteifungsrippen und Zwischenstreifen bewirken eine biege- und torsionssteife Verbindung zwischen dem Zentralteil und dem Schüsselrand bei gleichzeitig großflächigen Lüftungslöchern. Zur weiteren Gewichtsreduzierung können die Zwischenstreifen wenigstens eine, vorzugsweise in Radialrichtung längsgestreckte, Aussparung aufweisen.

Aus fertigungstechnischen und optischen Gründen sollten der Zwischenstreifen und die Randstege stetig ohne Knick in den Schüsselrand übergehen. Bei einer ersten erfindungsgemäßen Ausführungsalternative können jeweils zwei Randstege von benachbarten Speichenanordnungen stetig bzw. fließend in eine gemeinsame Ursprungswölbung münden, die zwischen zwei Bolzenlöchern in den Zentralteil übergeht bzw. aus deren Ebene herausgedrückt ist. Bei dieser Ausführungsform weisen die Randstege die stärkste Wölbung zur Radaußenseite auf und die Zwischenstege sind gegenüber den Randstegen zur Radinnenseite und gegenüber dem Zentralteil zur Radaußenseite versetzt angeordnet. Der Ursprung der Zwischenstreifen ist dann vorzusgweise radial gegenüber dem Ursprung der Verbindungsschenkel nach außen versetzt. Bei einer alternativen Ausführungsform können jeweils die beiden Randstege derselben Speichenanordnungen fließend in eine gemeinsame Ursprungswölbung münden, die zwischen zwei Bolzenlöchern in den Zentralteil übergeht. Die Zwischenstege weisen dann die stärkste Wölbung zur Radaußenseite auf und die Zwischenstege sind sowohl gegenüber den Randstegen als auch gegenüber dem Zentralteil zur Radaußenseite versetzt angeordnet. Der Ursprung des Zwischenstreifens fällt hierbei im wesentlichen mit dem Ursprung der Versteifungsrippen zusammen und ist gegenüber dem Ursprung von Randstegabschnitten nach innen versetzt. Bei beiden Ausführungsalternativen umrahmen Randsteg bzw. Schüsselrand die Lüftungslöcher vollständig, wobei die Randstege in der Höhe versetzt zu den sich anschließenden Abschnitten des Schüsselteils sind, so daß das Styling der Fahrzeugräder durch die Randstege und Lüftungslöcher zusätzlich betont wird.

Eine weitere Gewichtsreduzierung kann beim Fahrzeugrad dadurch erzielt werden, daß der Felgenteil partiell ausgewalzt ist oder aus Materialstreifen unterschiedlicher Dicken (taylored strips) zusammengefügt ist.

Weitere Vorteile und Ausgestaltungen des erfindungsgemäßen Fahrzeugrades ergeben sich aus der nachfolgenden Beschreibung von bevorzugten Ausführungsbeispielen. In der Zeichnung zeigen:
- **Fig. 1**: perspektivisch ein erfindungsgemäßes Fahrzeugrad gemäß einem ersten Ausführungsbeispiel;
- **Fig. 2**: perspektivisch den Schüsselteil für das erfindungsgemäße Fahrzeugrad aus Fig. 1;
- **Fig. 3**: perspektivisch ein erfindungsgemäßes Fahrzeugrad gemäß einem zweiten Ausführungsbeispiel; und
- **Fig. 4**: perspektivisch den Schüsselteil für das erfindungsgemäße Fahrzeugrad nach Fig. 3;

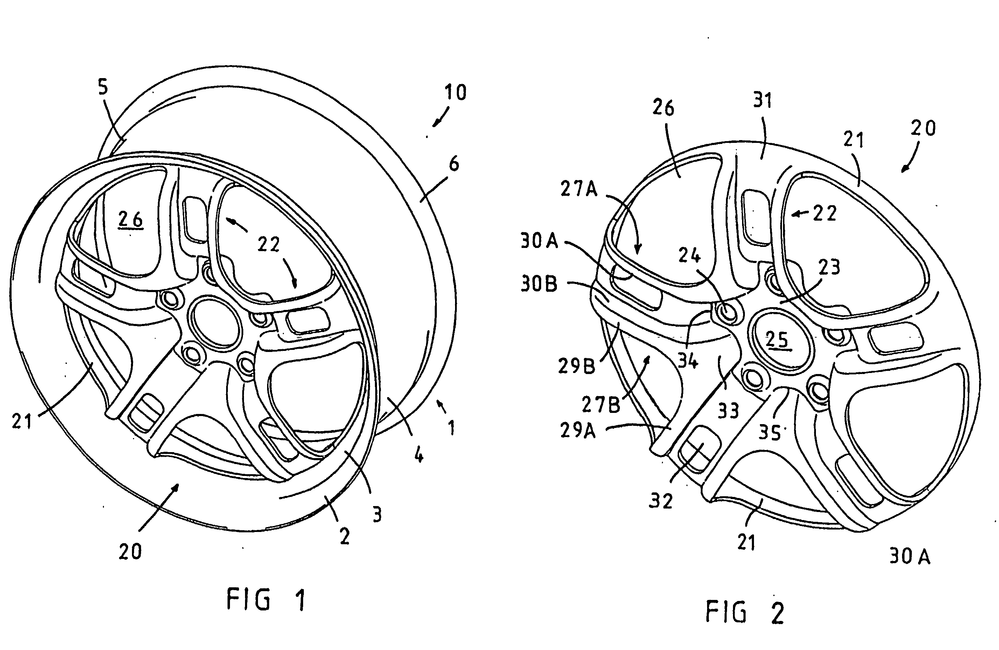

Das in Fig. 1 gezeigte, insgesamt mit 10 bezeichnete Fahrzeugrad für Personenkraftwagen besteht im wesentlichen aus dem Felgenteil 1, an dem ein Schüsselteil 20, wie noch erläutert werden wird, angeschlossen ist. Fig. 1 zeigt eine Ansicht auf das Fahrzeugrad 10 von der Radaußenseite. Der Felgenteil 1 umfasst, wie an sich bekannt, ein äußeres Felgenhorn 2, eine äußere Felgenschulter 3, ein Felgenbett 4, eine innere Felgenschulter 5 und ein inneres Felgenhorn 6. Der Felgenteil hat für die Montage des nicht dargestellten Reifens, der mit der Felge abgestützt wird, ein Felgentiefbett. Im gezeigten Ausführungsbeispiel ist der Schüsselteil 20 mit seinem Schüsselrand 21 mit Presssitz in das Felgentiefbett 4 eingezogen und an dessen Innenumfang über nicht weiter dargestellte Schweißnähte befestigt. Der Aufbau des Schüsselteils 20 wird nun zuerst unter Bezugnahme auf Fig. 2 erläutert.

Der Schüsselteil 20 ist aus einer vorzugsweise aus hochfestem Stahl oder Aluminium-Bandmaterial bestehenden Metallblechplatine durch umformende Fertigungsverfahren, insbesondere Tiefziehen, gefertigt. Die wesentlichen, erfindungsgemäße Komponenten der Schüsselkontur des Schüsselteils 20 liegen in dem konzentrisch umlaufenden, durchgehenden Schüsselrand 21 und den hier insgesamt fünf stern- bzw. strahlenförmig nach außen gerichteten Speichenanordnungen 22, die den Schüsselrand 21 mit dem Zentralteil 23, der hier fünf Bolzenlöcher 24 zur Aufnahme von Befestigungsschrauben und ein Mittenloch 25 zur Zentrierung an der Radnabe eines Fahrzeugs umfasst, verbindet. In die Bolzenlöcher 24 werden, wie an sich bekannt, die Radschrauben eingesteckt, um das Fahrzeugrad 10 an der Radnabe eines Fahrzeugs zu befestigen. Die Bolzenlöcher 24 können mit kugeligen oder kegeligen Bolzenlochansenkungen versehen sein und das Mittenloch 25 kann mit einem Mittenlochkragen versehen sein. Die Bolzenlöcher 24 und das Mittenloch können vor dem Tiefziehen ausgestanzt werden.

Der Zentralteil 23 des Schüsselteils 20 ist weitestgehend eben und beim gezeigten Ausführungsbeispiel läuft eine mit dem Zentralteil 23 zusammenfallende Ebene durch den Schüsselrand 21, der im wesentlichen senkrecht zur Ebene des Zentralteils 23 und parallel zur nicht dargestellten Radachse ausgerichtet ist, so daß die Kräfte ohne axialen Versatz zum Zentralteil 23 in den Schüsselteil 20 eingeleitet werden. Der Schüsselrand 21 kann zur Erzielung des Presssitzes, angepaßt an den Neigungswinkel der äußeren Felgenschulter, um etwa 90° bis 97° relativ zum Zentralteil 23 umgebogen sein. Wie die Fig. 1 und 2 gut erkennen lassen, hat das Schüsselteil 20 äußerst großflächige Lüftungslöcher 26, die sich dreieckig bzw. V-förmig ausgehend vom Zentralteil 23 nach außen erweitern. Die Lüftungslöcher 26 werden seitlich jeweils von zwei benachbarten Speichenanordnungen 22 und am Außenrand vom Schüsselrand 21 begrenzt. Die großflächigen Lüftungslöcher 26 ermöglichen eine gute Belüftung von Scheibenbremsen; gleichzeitig führen sie jedoch zu einer Reduzierung des die Axial- und Radialkräfte übertragenden Querschnitts zwischen Fahrzeugnabe und Reifen bzw. Zentralteil 23 und Felgenteil 1. Jede Speichenanordnung 22 weist daher jeweils zwei sich im wesentlichen radial und parallel zueinander erstreckende, als Versteifungsrippen 27A,27B ausgeführte Speichenstreben auf, die über den ebenen Zentralteil 23 hinaus nach außen gewölbt sind integral in den Schüsselrand 21 übergehen. Die Speichenstrebenenden sind mithin in den Schüsselrand 21 integriert. Die Wölbung der Speichenanordnungen 22 über das Zentralteil 23 hinaus kann einige Zentimeter betragen, so daß der Schüsselteil 20 ein individuelles Styling erhalten kann. Der Aufbau und das Styling des Schüsselteils 20 mit größeren Lüftungslöchern bzw. -durchbrüchen 26 ermöglicht die Verwendung von Radkappen mit entsprechend großen Durchbrüchen, so daß die Bremsen bzw. Bremsscheiben größtenteils sichtbar bleiben und ausreichend belüftet sind.

Der radial innere Ursprung 35 beider Versteifungsrippen 27A,27B liegt etwa auf Höhe der Bolzenlöcher 24. Jede Versteifungsrippe 27A,27B weist zumindest eine Stufe 28 auf, so daß die Verbindungsstreben 27A,27B sowohl einen flachen, schmalen und zur Fahrzeugaußenseite weisenden Randsteg 29A, 29B als auch einen Verbindungsschenkel 30A,30B umfassen, der etwa senkrecht zum Zentralteil 23 ausgerichtet sind. Die radaußenseitigen Flächen der Verbindungsschenkel 30A,30B liegen einander parallel gegenüber und sind über einen Zwischenstreifen 31, der mit einer radial langgestreckten Aussparung 32 versehen ist, verbunden. Da der Schüsselteil 20 aus einer einstückigen Platine gefertigt ist, weist jede Versteifungsrippe 22 mithin im Querschnitt in etwa ein U-Profil mit umgebogenen, die Randstege 29A,29B bildenden Endzonen auf. Die Randstege 29A,29B zweier benachbarter Speichenanordnungen 22 münden fließend in eine gemeinsame, stromlinienförmig ausgestaltete Ursprungswölbung 33, die unmittelbar in das Zentralteil 23 übergeht bzw. aus deren Ebene herausgedrückt ist. Der Ursprung 35 der Ursprungswölbung 33 im Zentralteil 23 liegt hierbei radial auf gleicher Höhe wie bzw. zwischen zwei konzentrisch um die zentrale Radachse angeordneten Bolzenlöcher 24. Fig. 2 läßt weiter erkennen, daß der Ursprung 34 der Zwischenstreifen 31 radial weiter außen liegt als der Ursprung 35 der Ursprungswölbung 33.

Die Biege- und Torsionssteifigkeit des Schüsselteils 20 wird maßgeblich durch die Profilform der Versteifungsrippen 22 mit radial sich erstreckenden, senkrecht zum Schüsselrand ausgerichteten Randstege 29A,29B sowie axial ausgerichteten Verbindungsschenkel 30A, 30B bestimmt, wobei jede Speichenanordnungen 22 mittels der Zwischenstreifen 31 zusätzlich versteift ist. Der Schüsselteil 20 und mithin das Fahrzeugrad 10 bietet daher trotz trotz der großflächigen Lüftungslöcher 26 ausreichend Sicherheit gegenüber Radschüsselbruch. Wie eingangs dargelegt, besteht der Schüsselteil 20 aus einer einzigen Platine, die zuerst tiefgezogen bzw. auf die Endkontur gedrückt wurde und an der anschließend sämtliche Lüftungslöcher 26 ausgestanzt wurden. Der Schüsselrand 21, der in den schmalsten Bereichen nur etwas mehr als 1 cm beträgt, kann hierbei für die einzelnen Umformschritte als Angriffsfläche für Niederhalterwerkzeuge dienen und erst in einem letzten Verfahrensschritt endgültig parallel zur Radachse umgebogen werden. Der Schüsselteil 20 wird als letzter Verfahrensschritt mit Presssitz in das Tiefbett des Felgenteils 1 eingezogen und mit diesem verschweißt. Vorzugsweise wird die Lage der nicht gezeigten Schweißnähte auf die Lage der Speichenanordnungen abgestimmt.

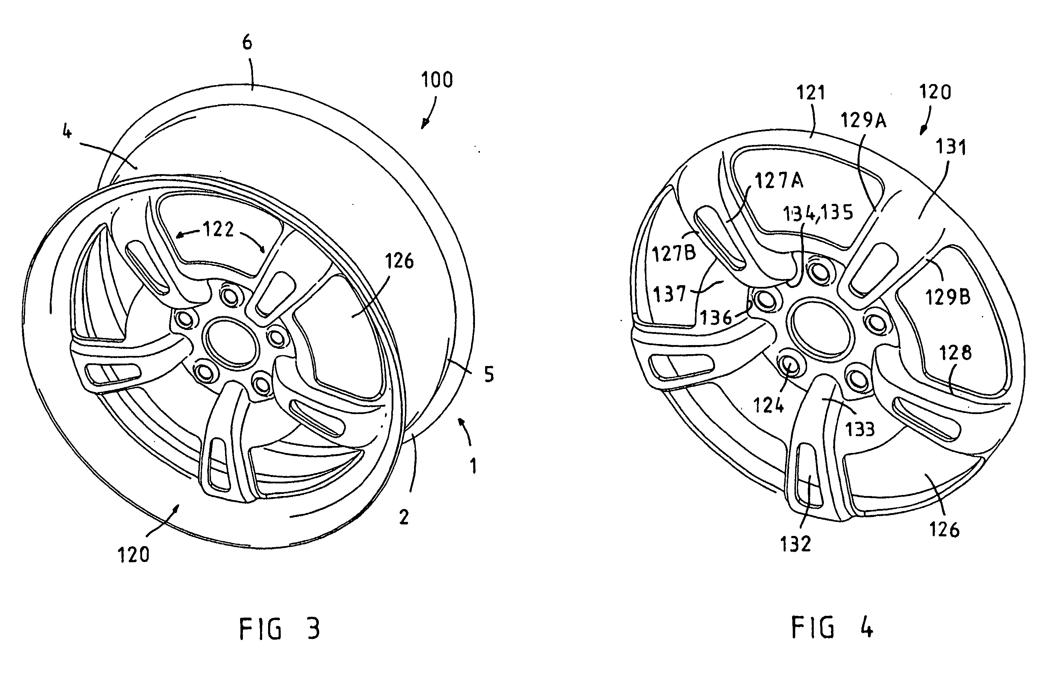

Fig. 3 und Fig. 4 zeigen ein Fahrzeugrad 100 gemäß einem zweiten Ausführungsbeispiel. Der Felgenteil 1 ist identisch wie beim zuvor beschriebenen Ausführungsbeispiel, so daß gleiche Bezugszeichen verwendet werden und eine Beschreibung nicht erfolgt. Beim Schüsselteil 120 sind sämtliche Bezugszeichen um 100 erhöht. Der Unterschied zur Radschüssel 20 nach dem ersten Ausführungsbeispiel liegt in der geänderten Wölbungshöhe der Zwischenstreifen 131 und Randstege 129A, 129B der Versteifungsrippen 127A, 127B der jeweiligen Speichenanordnungen 122. Das von Zwischenstreifen 131, Verbindungsschenkeln 130A, 130B, Kante 128 und Randstegen 129A, 129B gebildete U-Querschnittsprofil ist hier gegenüber dem ersten Ausführungsbeispiel invertiert und die Zwischenstreifen 131 weisen die stärkste Wölbung, d.h. die größte Erhebung über den Zentralteil 123 auf. Die schmalen Randstege 129A, 129B sind gegenüber den Zwischenstreifen 131 zurückversetzt. Ferner verlaufen die Versteifungsrippen 127A, 127B nicht genau parallel zueinander sondern der Abstand zwischen ihnen vergrößert sich mit zunehmendem Radius. Die Lüftungslöcher 126 erhalten hierdurch eine trapezförmige Kontur im Gegensatz zu der dreieckförmigen Kontur der Lüftungslöcher 26. Die Versteifungsrippen 127A, 127B derselben Speichenanordnung 122 münden zusammen mit dem Zwischenstreifen 131 in eine gemeinsame Ursprüngswölbung 133, so daß deren Ursprung 134 mit dem Ursprung 135 für die Versteifungsrippen 127A, 127B zusammenfällt, während der Ursprung 136 von Randstegabschnitten 137 radial weiter außen liegt. Die Randstegabschnitten 137 sind konkav gekrümmt, deutlich breiter als die Randstege 129A, 129B selbst und steigen ausgehend vom Zentralteil 123 kontinuierlich bis zu den Lüftungslöchern 126 an.

Die Erfindung ist nicht auf die gezeigten und beschriebenen Ausführungsbeispiele beschränkt. Der Schüsselteil kann auch eine größere oder geringere Anzahl an Speichenanordnungen aufweisen. Die Aussparung im Zwischenstreifen könnte entfallen oder eine andere Kontur erhalten. Solche und andere Modifikationen sollen in den Schutzbereich der Schutzansprüche fallen.

## Patentansprüche

1. Fahrzeugrad, insbesondere für Personenkraftwagen, mit einem Felgenhörner (2,6), Felgenschultern (3,5) und Felgenbett (4) umfassenden Felgenteil (1) zur Aufnahme eines Reifens, und einem an dem Felgenteil (1) angeschlossenen, aus einer einstükkigen Metallblechplatine durch Umformen und Schneiden gebildeten Schüsselteil (20), der einen Bolzenlöcher (24) für Radschrauben und ein Mittenloch (25) für die Fahrzeugnabe aufweisenden Zentralteil (23) und mehrere Speichenanordnungen (22) für die Kraftübertragung zwischen Fahrzeugnabe und Felgenteil (1) umfasst, wobei jede Speichenanordnung (22) von zwei sich im wesentlichen radial vom Zentralteil (23) aus erstreckenden Speichenstreben gebildet ist, und die äußeren Speichenstrebenenden der Speichenstreben einer Speichenanordnung über eine Querstrebe miteinander verbunden sind, **dadurch gekennzeichnet, daß** die Querstreben in einen konzentrisch umlaufenden, im wesentlichen parallel zur Radachse ausgerichteten und sämtliche Speichenstrebenenden miteinander verbindenden ringförmigen Schüsselrand (21;121) integriert sind, der einstückig aus dem Metallblech ausgebildet ist, das Anschlußteil für den Anschluß an dem Felgenteil (1) bildet und jeweils zusammen mit zwei Speichenstreben (27A,27B; 127A,127B) benachbarter Speichenanordnungen großflächige Öffnungen bzw. Lüftungslöcher (26;126) im Schüsselteil (20;120) begrenzt.

2. Fahrzeugrad nach Anspruch 1, **dadurch gekennzeichnet, daß** der ringförmige Schüsselrand (21;121) um etwa 90° bis 97° relativ zum Zentralteil (23;123) umgebogen ist und mit Presssitz in den Felgenteil (1) eingefügt ist.

3. Fahrzeugrad nach Anspruch 1 oder 2, **dadurch gekennzeichnet, daß** der Schüsselrand (21;121) am Innenumfang der äußeren Felgenschulter oder vorzugsweise im Felgentiefbett (4) des Felgenteils (1) angeschlossen ist.

4. Fahrzeugrad nach einem der Ansprüche 1 bis 3, **dadurch gekennzeichnet, daß** der Schüsselteil (20;120) mit einer auf die Anzahl an Speichenanordnungen abgestimmten Anzahl von Schweißnähten am Felgenteil (1) befestigt ist.

5. Fahrzeugrad nach Anspruch 4, **dadurch gekennzeichnet, daß** die Anzahl der Speichenanordnungen (22;122) der Anzahl an Bolzenlöchern (24;124) entspricht.

6. Fahrzeugrad nach einem der Ansprüche 1 bis 5, **dadurch gekennzeichnet, daß** eine durch das Zentralteil (23;123) hindurchgehende Ebene den Schüsselrand (21;121) schneidet und/oder die Speichenanordnungen (22;122) zwischen Zentralteil (23;123) und Schüsselrand (21;121) aus der Ebene des Zentralteils (23;123) zur Radaußenseite herausgewölbt sind.

7. Fahrzeugrad nach einem der Ansprüche 1 bis 6, **dadurch gekennzeichnet, daß** jede Speichenanordnung (22;122) von zwei parallel zueinander und im wesentlichen radial verlaufenden Versteifungsrippen (27A,27B; 127A,127B) gebildet ist, deren Ursprung (35;135) im Zentralteil (23;123) auf Höhe der Bolzenlöcher (24) liegt und die wenigstens eine Stufe (28;128) zwischen einem die Lüftungsöffnungen (26;126) begrenzenden Randsteg (29A,29B;129A,129B) und einem senkrecht zum Zentralteil (23;123) ausgerichteten Verbindungsschenkel (30A,30B; 130A,130B) aufweist.

8. Fahrzeugrad nach Anspruch 7, **dadurch gekennzeichnet, daß** die beiden Verbindungsschenkel (30A,30B; 130A,130B) der Versteifungsrippen (27A,27B; 127A,127B) einer Speichenanordnung (22;122) über einen Zwischenstreifen (31;131) ineinander übergehen, der sich vom Zentralteil (23;123) bis zum Schüsselrand (21;121) durchgehend erstreckt.

9. Fahrzeugrad nach Anspruch 8, **dadurch gekennzeichnet, daß** der Zwischenstreifen (31;131) wenigstens eine vorzugsweise in Radialrichtung langgestreckt ausgebildete Aussparung (32;132) aufweist.

10. Fahrzeugrad nach einem der Ansprüche 7 bis 9, **dadurch gekennzeichnet, daß** der Zwischenstreifen (31) und die Randstege (29A,29B) fließend in den Schüsselrand (21) übergehen und/oder jeweils zwei Randstege (29A,29B) von benachbarten Speichenanordnungen fließend in eine gemeinsame Ursprungswölbung (33) münden, die zwischen zwei Bolzenlöchern (24) in den Zentralteil (23) übergeht.

11. Fahrzeugrad nach Anspruch 10, **dadurch gekennzeichnet, daß** die Randstege (29A,29B) die stärkste Wölbung zur Radaußenseite aufweisen und die Zwischenstege (31) gegenüber den Randstegen (29A,29B) zur Radinnenseite und gegenüber dem Zentralteil (23) zur Radaußenseite versetzt angeordnet sind.

12. Fahrzeugrad nach Anspruch 10 oder 11, **dadurch gekennzeichnet, daß** der Ursprung (34) des Zwischenstreifens (31) radial gegenüber dem Ursprung (35) der Versteifungsrippen (29A,29B) nach außen versetzt ist.

13. Fahrzeugrad nach einem der Ansprüche 7 bis 9, **dadurch gekennzeichnet, daß** der Zwischenstreifen (131) und die Randstege (129A,129B) fließend in den Schüsselrand (121) übergehen und/oder jeweils die beiden Randstege (129A,129B) derselben Speichenanordnungen fließend in eine gemeinsame Ursprungswölbung (133) münden, die zwischen zwei Bolzenlöchern (124) in den Zentralteil (123) übergeht.

14. Fahrzeugrad nach Anspruch 13, **dadurch gekennzeichnet, daß** die Zwischenstege (131) die stärkste Wölbung zur Radaußenseite aufweisen und die Zwischenstege (131) gegenüber den Randstegen (129A,129B) und gegenüber dem Zentralteil (131) zur Radaußenseite versetzt angeordnet sind.

15. Fahrzeugrad nach Anspruch 13 oder 14, **dadurch gekennzeichnet, daß** der Ursprung (134) des Zwischenstreifens (131) mit dem Ursprung (135) der Versteifungsrippen (129A,129B) zusammenfällt und gegenüber dem Ursprung (136) von Randstegabschnitten (137) nach innen versetzt ist.

16. Fahrzeugrad nach einem der Ansprüche 1 bis 15, **dadurch gekennzeichnet, daß** der Felgenteil partiell ausgewalzt ist oder aus Materialstreifen unterschiedlicher Dicke (taylored strips) zusammengefügt ist.

## Claims

1. Vehicle wheel, in particular for motor vehicles, with a rim part (1) comprising rim horns (2, 6), rim shoulders (3, 5) and a rim bed (4) for the reception of a tyre, and a cover part (20) connected to the rim part (1), which cover part is formed from a one-piece sheet metal plate by forming and cutting, which comprises a central part comprising bolt holes (24) for wheel screws and a centre hole (25) for the central part (23) comprising the vehicle hub and several spoke arrangements (22) for the load transfer between vehicle hub and rim part (1), whereby every spoke arrangement (22) is formed from two spoke rods extending essentially radially from the central part (23), and the outer spoke rod ends of the spoke rods of a spoke arrangement are connected to one another by means of a transverse rod, **characterised in that** the transverse rods are integrated in a concentric revolving cover border (21; 121) essentially parallel to the wheel axis and connecting all spoke rods ends to one another, which is formed in one piece from the sheet metal, forms the connecting part for the connection to the rim part (1) and limits openings with large areas or ventilation holes (26; 126) in the cover part (20; 120) together with two spoke rods (27A, 27B; 127A, 127B) of adjacent spoke arrangements.

2. Vehicle wheel according to claim 1, **characterised in that** the annular cover border (21; 121) is bent relative to the central part (23; 123) at about 90° to 97° and is inserted into the rim part (1) by means of press fit.

3. Vehicle wheel according to claim 1 or 2, **characterised in that** the cover border (21; 121) is connected to the inner circumference of the outer wheel rim shoulder or preferably in the rim deep bed (4) of the rim part (1).

4. Vehicle wheel according to one of claims 1 to 3, **characterised in that** the cover part (20; 120) is secured to the rim part (1) with a number of weld seams adjusted to the number of spoke arrangements.

5. Vehicle wheel according to claim 4, **characterised in that** the number of spoke arrangements (22; 122) corresponds to the number of bolt holes (24; 124).

6. Vehicle wheel according to one of claims I to 5, **characterised in that** a plane passing through the central part (23; 123) intersects the cover border (21; 121) and/or the spoke arrangements (22; 122) are curved outwardly between the central part (23; 123) and the cover border (21; 121) from the plane of the central part (23; 123) to the outer wheel side.

7. Vehicle wheel according to one of claims 1 to 6, **characterised in that** every spoke arrangement (22; 122) is formed of two parallel and essentially radially proceeding reinforcing ribs (27A, 27B; 127A, 127B), the origin (35; 135) of which is at the height of the bolt holes (24) in the central part (23; 123) and which comprises at least one step (28; 128) between a border bar (29A, 29B; 129A, 129B) limiting the ventilation holes (26; 126) and a connecting leg (30A, 30B; 130A, 130B) aligned vertically to the central part (23; 123).

8. Vehicle wheel according to claim 7, **characterised in that** the two connecting legs (30A, 30B; 130A, 130B) of the reinforcing ribs (27A, 27B; 127A, 127B) of a spoke arrangement (22; 122) meet one another via an intermediate strip (31; 131) which extends continuously from the central part (23; 123) to the cover border (21; 121).

9. Vehicle wheel according to claim 8, **characterised in that** the intermediate strip (31; 131) comprises at least one recess (32; 132) preferably formed elongated in the radial direction.

10. Vehicle wheel according to one of claims 7 to 9, **characterised in that** the intermediate strip (31) and the border bars (29A, 29B) meet the cover border (21) in a flowing manner and/or two border bars (29A, 29B) of adjacent spoke arrangements pass into a common origin curvature (33) in a flowing manner, which meets the central part (23) between two bolt holes (24).

11. Vehicle wheel according to claim 10, **characterised in that** the border bars (29A, 29B) comprise the strongest curvature towards the outer wheel side and the intermediate bars (31) are arranged in an offset manner towards the inner wheel side with regard to the border bars (29A, 29B) and towards the outer wheel side with regard to the central part (23).

12. Vehicle wheel according to claim 10 or 11, **characterised in that** the origin (34) of the intermediate strip (31) is offset radially outwards with regard to the origin (35) of the reinforcing ribs (29A, 29B).

13. Vehicle wheel according to one of claims 7 to 9, **characterised in that** the intermediate strip (131) and the border bars (129A, 129B) pass into the cover border (121) in a flowing manner and/or the two border bars (129A, 129B) of the same spoke arrangement meet a common origin curvature (133) in a flowing manner, which passes to the central part (123) between two bolt holes (124).

14. Vehicle wheel according to claim 13, **characterised in that** the intermediate bars (131) have the strongest curvature to the outer wheel side and that the intermediate bars (131) are arranged in an offset manner to the outer wheel side with regard to the border bars (129A, 129B) and with regard to the central part (131).

15. Vehicle wheel according to claim 13 or 14, **characterised in that** the origin (134) of the intermediate strip (131) coincides with the origin (135) of the reinforcing ribs (129A, 129B) and is offset inwardly with regard to the origin (136) of border bar sections (137).

16. Vehicle wheel according to one of claims 1 to 15, **characterised in that** the rim part is partially rolled out or is composed of material strips having varying thickness (tailored strips).

## Revendications

1. Roue de véhicule, en particulier pour voiture particulière, comprenant d'une part une partie jante (1) destinée à recevoir un pneu et comprenant elle-même des rebords de jante (2,6), des épaulements de jante (3,5) et une embase de jante (4), et d'autre part une partie flasque (20) raccordée à la partie jante (1), et obtenue par formage et coupe à partir d'une platine de tôle métalllique d'une seule pièce, la partie flasque comprenant elle-même d'une part une partie centrale présentant des trous de boulons (24) pour des vis de roue et un trou central (25) pour le moyeu du véhicule, et d'autre part plusieurs agencements de rayon (22) pour la transmission d'effort entre le moyeu du véhicule et la partie jante (1), chaque agencement de rayon (22) étant constitué de deux membrures s'étendant sensiblement radialement à partir de la partie centrale (23) et les extrémités extérieures des membrures d'un agencement de rayon étant reliées ensemble par une membrure transversale, **caractérisée en ce que** les membrures transversales sont intégrées dans un bord de flasque annulaire (21 ; 121) qui relie ensemble toutes les extrémités de membrures de rayon, entoure concentriquement et est orienté sensiblement parallèlement à l'axe de roue, est constitué d'une seule pièce à partir de la tôle métallique, forme la partie de raccordement pour le raccordement à la partie jante (1), et délimite à chaque fois avec deux membrures de rayon (27A, 27B ; 127A, 127B) appartenant à des agencements de rayon voisins, des ouvertures ou trous de ventilation de grande surface (26 ; 126) dans la partie flasque (20 ; 120).

2. Roue de véhicule selon la revendication 1, **caractérisée en ce que** le bord de flasque annulaire (21 ; 121) est recourbé d'environ 90° à 97° par rapport à la partie centrale (23 ; 123) et inséré en ajustement forcé dans la partie jante (1).

3. Roue de véhicule selon la revendication 1 ou 2, **caractérisée en ce que** le bord de flasque (21 ; 121) est raccordé à la périphérie intérieure de l'épaulement extérieur de la jante ou de préférence dans l'embase profonde (4) de la partie jante (1).

4. Roue de véhicule selon l'une des revendications 1 à 3, **caractérisée en ce que** la partie flasque (20 ; 120) est raccordée à la partie jante (1) avec un nombre de cordons de soudure adapté au nombre des agencements de rayon.

5. Roue de véhicule selon la revendication 4, **caractérisée en ce que** le nombre des agencements de rayon (22 ; 122) correspond au nombre de trous de boulons (24 ; 124).

6. Roue de véhicule selon l'une des revendications 1 à 5, **caractérisée en ce qu'**un plan passant par la partie centrale (23 ; 123) coupe le bord de flasque (21 ; 121) ; et/ou entre la partie centrale (23 ; 123) et le bord de flasque (21 ; 121) les agencements de rayon (22 ; 122) sont bombés vers l'extérieur de la roue à partir du plan de la partie centrale (23 ; 123).

7. Roue de véhicule selon l'une des revendications 1 à 6, **caractérisée en ce que** chaque agencement de rayon (22 ; 122) est constitué de deux nervures de renforcement (27A, 27B ; 127A, 127B) s'étendant sensiblement radialement et parallèlement l'une à l'autre, dont l'origine (35 ; 135) se trouve dans la partie centrale (23 ; 123) au niveau des trous de boulon (24) et qui présentent au moins un gradin (28 ; 128) entre une aile de bord (29A, 29B ; 129A, 129B) délimitant les ouvertures de ventilation (26 ; 126) et une aile de liaison (30A, 30B ; 130A, 130B) orientée perpendiculairement à la partie centrale (23 ; 123).

8. Roue de véhicule selon la revendication 7, **caractérisée en ce que** les deux ailes de liaison (30A, 30B ; 130A, 130B) des nervures de renforcement (27A, 27B ; 127A, 127B) d'un agencement de rayon (22 ; 122) se raccordent l'une à l'autre par l'intermédiaire d'une bande intermédiaire (31 ; 131) qui s'étend de manière continue de la partie centrale (23 ; 123) jusqu'au bord de flasque (21 ; 121).

9. Roue de véhicule selon la revendication 8, **caractérisée en ce que** la bande intermédiaire (31 ; 131) présente au moins un évidement (32 ; 132) réalisé de préférence radialement allongé.

10. Roue de véhicule selon l'une des revendications 7 à 9, **caractérisée en ce que** la bande intermédiaire (31) et les ailes de bord (29A, 29B) se raccordent de manière coulée avec le bord de flasque (21) ; et/ou chaque paire d'ailes de bord (29A, 29B) appartenant à des agencements de rayon voisins débouche de manière coulée dans un bombé initial commun (33) qui se raccorde à la partie centrale (23) entre deux trous de boulon (24).

11. Roue de véhicule selon la revendication 10, **caractérisée en ce que** les ailes de bord (29A, 29B) présentent le plus fort bombé vers l'extérieur de la roue et les ailes intermédiaires (31) sont dans une disposition décalée vers le côté intérieur de la roue par rapport aux ailes de bord (29A, 29B) et vers le côté extérieur de la roue par rapport à la partie centrale (23).

12. Roue de véhicule selon la revendication 10 ou 11, **caractérisée en ce que** l'origine (34) de la bande intermédiaire (31) est décalée radialement vers l'extérieur par rapport à l'origine (35) des nervures de renforcement (29A, 29B).

13. Roue de véhicule selon l'une des revendications 7 à 9, **caractérisée en ce que** la bande intermédiaire (131) et les ailes de bord (129A, 129B) se raccordent de manière coulée avec le bord de flasque (121) ; et/ou les deux ailes de bord (29A, 29B) de chaque agencement de rayon débouchent de manière coulée dans un bombé initial commun (133) qui se raccorde à la partie centrale (123) entre deux trous de boulon (124).

14. Roue de véhicule selon la revendication 13, **caractérisée en ce que** les ailes intermédiaires (131) présentent le plus fort bombé vers l'extérieur de la roue et les ailes intermédiaires (131) sont dans une disposition décalée vers le côté extérieur de la roue par rapport à la partie centrale (131) et par rapport aux ailes de bord (129A, 129B).

15. Roue de véhicule selon la revendication 13 ou 14, **caractérisée en ce que** l'origine (134) de la bande intermédiaire (131) coïncide avec l'origine (135) des nervures de renforcement (129A, 129B), et est décalée vers l'intérieur par rapport à l'origine (136) de parties (137) d'ailes de bord.

16. Roue de véhicule selon l'une des revendications 1 à 15, **caractérisée en ce que** la partie jante est partiellement laminée ou composée de bandes de matière d'épaisseur différente (taylored strips).
